# FASCICULE DE BREVET EUROPEEN

(11) **EP 3 038 355 B1**
(45) Date de publication et mention de la délivrance du brevet: **29.04.2020**
(21) Numéro de dépôt: 15202684.5
(22) Date de dépôt: 24.12.2015
(51) Int. Cl.: H04N 7/18, G08B 13/196

(54) **PROCÉDÉ D'AFFICHAGE D'IMAGES OU DE VIDÉOS ET INSTALLATION ASSOCIÉE**
BILD- ODER VIDEOANZEIGEVERFAHREN, UND ENTSPRECHENDE ANLAGE
A METHOD FOR DISPLAYING IMAGES OR VIDEOS AND ASSOCIATED INSTALLATION

(30) Priorité: 24.12.2014 FR 1403007
(43) Date de publication de la demande: 29.06.2016
(73) Titulaire: THALES, 92400 Courbevoie (FR)
(72) Inventeur: BOUDIN, Thierry, 78141 VELIZY CEDEX (FR)
(74) Mandataire: Lavoix

(56) Documents cités:
- JP-A- 2008 225 427
- US-A1- 2010 250 369
- US-A1- 2011 187 865
- US-A1- 2013 250 121

## Description

La présente invention concerne un procédé d'affichage, sur un afficheur, d'images ou de vidéos en provenance de caméras.

La présente invention concerne, également, une installation d'affichage associée.

Dans le domaine de la vidéo surveillance, des opérateurs, par exemple la police, l'armée ou encore une société de sécurité, ont pour rôle de détecter des situations à risque sur des vidéos provenant de caméras de vidéos surveillance. Pour agir rapidement sur le terrain, les opérateurs effectuent des patrouilles et adaptent leur parcours en fonction du contenu des vidéos envoyées par les caméras de vidéosurveillance de la zone patrouillée.

Par exemple, un opérateur affecté à la surveillance d'une zone, reçoit les vidéos de toutes les caméras qui couvrent la zone surveillée. L'opérateur sélectionne ensuite manuellement les vidéos qu'il souhaite regarder en privilégiant les vidéos des caméras les plus proches de sa position.

Cependant, en sélectionnant manuellement les vidéos, l'opérateur perd du temps et ne concentre pas son attention sur le contenu des vidéos, ce qui n'est pas optimal en termes d'ergonomie.

De plus, l'opérateur ne dispose pas d'une vue d'ensemble des vidéos des caméras de la zone patrouillée. L'opérateur est donc susceptible de ne pas détecter des situations à risque malgré les informations envoyées par les caméras de la zone patrouillée.

Le document US 2010/0250369 A décrit un exemple d'un procédé d'affichage d'images en provenance de caméras sur un afficheur.

Le document US 2011/187865 A décrit la sélection et l'affichage de flux vidéo des caméras les plus proches d'un afficheur.

Un but de l'invention est de proposer un affichage de vidéos améliorant l'ergonomie d'un opérateur.

A cet effet, l'invention a pour objet un procédé d'affichage d'images ou de vidéos en provenance de caméras, l'afficheur comportant au moins une zone d'affichage, le procédé comportant :
- la localisation de l'afficheur,
- la recherche des caméras situées dans un espace défini autour de l'afficheur,
- le calcul de la distance entre l'afficheur et chaque caméra localisée,
- la détermination des images ou des vidéos à afficher sur la zone d'affichage de l'afficheur en fonction d'au moins un premier critère relatif à la distance calculée pour chaque caméra, et
- l'affichage des images ou des vidéos déterminées sur l'afficheur.

Suivant des modes particuliers de mise en œuvre, le procédé d'affichage comprend une ou plusieurs des caractéristiques suivantes, prise(s) isolément ou selon toutes les combinaisons techniquement possibles :
- lors de l'étape d'affichage, les images ou les vidéos sont affichées sur l'afficheur selon un ordre prédéfini, l'ordre prédéfini étant fonction de la distance de chaque caméra à l'afficheur ;
- l'ordre prédéfini permet l'affichage des images ou des vidéos des caméras par ordre croissant de la distance de l'afficheur à chaque caméra ;
- le premier critère stipule que les distances de chaque caméra à l'afficheur sont ordonnées selon un indice croissant, chaque zone d'affichage étant associée à un indice, les images ou vidéos affichables sur ladite zone d'affichage étant issues de caméras dont la distance à l'afficheur est ordonnée avec l'indice associé à ladite zone d'affichage ;
- lors de l'étape de détermination, les images ou les vidéos déterminées satisfont un deuxième critère relatif à la position de chaque caméra par rapport à l'orientation de l'afficheur ;
- l'espace défini est divisé en différents secteurs angulaires, l'étape de détermination comprenant la détermination du secteur angulaire dans lequel est située chaque caméra localisée.
- le deuxième critère stipule que chaque zone d'affichage est associée à au moins un secteur angulaire, les images ou vidéos affichables sur ladite zone d'affichage étant issues de caméras appartenant au secteur angulaire associé à ladite zone d'affichage ;
- le nombre de secteurs angulaires est supérieur ou égal à un moins le nombre de zones d'affichage ; et
- l'espace défini est une zone située au nord de l'afficheur.

L'invention concerne aussi une installation d'affichage d'images ou de vidéos en provenance de caméras, l'installation comportant un terminal comprenant :
- un afficheur comportant au moins une zone d'affichage,
- un module de localisation de l'afficheur,
- un module de recherche des caméras situées dans un espace défini autour de l'afficheur,
- un module de calcul de la distance entre l'afficheur et chaque caméra localisée,
- un module de détermination des images ou des vidéos à afficher sur la zone d'affichage de l'afficheur en fonction d'au moins un premier critère relatif à la distance calculée pour chaque caméra, et
- un module d'affichage des images ou des vidéos déterminées par le module de détermination.

L'invention concerne aussi un procédé d'affichage selon la revendication 1.

Suivant des modes particuliers de mise en œuvre, le procédé d'affichage comprend une ou plusieurs des caractéristiques des revendications 2 à 6, prise(s) isolément ou selon toutes les combinaisons techniquement possibles.

L'invention porte, également, sur une installation selon la revendication 7.

D'autres caractéristiques et avantages de l'invention apparaîtront à la lecture de la description qui suit de modes de réalisation de l'invention, données uniquement à titre d'exemples non limitatifs et en référence aux dessins annexés dans lesquels :
- la figure 1 est une représentation schématique d'une installation d'affichage selon l'invention, l'installation comportant un terminal,
- la figure 2 est un organigramme d'un exemple de mise en œuvre d'un procédé d'affichage selon un premier mode de réalisation de l'invention,
- la figure 3 est une représentation schématique de zones d'affichages sur un afficheur du terminal de la figure 1,
- la figure 4 est une représentation schématique d'un terminal entouré de caméras,
- la figure 5 est une représentation schématique analogue à la figure 3 dans laquelle les caméras de la figure 4 sont associées aux zones d'affichage de la figure 3,
- la figure 6 est un organigramme d'un exemple de mise en œuvre d'un procédé d'affichage selon un deuxième mode de réalisation de l'invention,
- la figure 7 est une autre représentation schématique de zones d'affichages sur l'afficheur du terminal de la figure 1,
- la figure 8 est une autre représentation schématique d'un terminal entouré de caméras, l'espace autour du terminal étant divisé en secteurs angulaires,
- la figure 9 est une représentation schématique analogue à la figure 7 dans laquelle les secteurs angulaires de la figure 8 sont associés aux zones d'affichage de la figure 7,
- la figure 10 est une représentation schématique analogue à la figure 8, des caméras étant disposés dans l'espace autour du terminal, et
- la figure 11 est une représentation schématique analogue à la figure 7, les caméras de la figure 9 étant associées aux zones d'affichage de la figure 7.

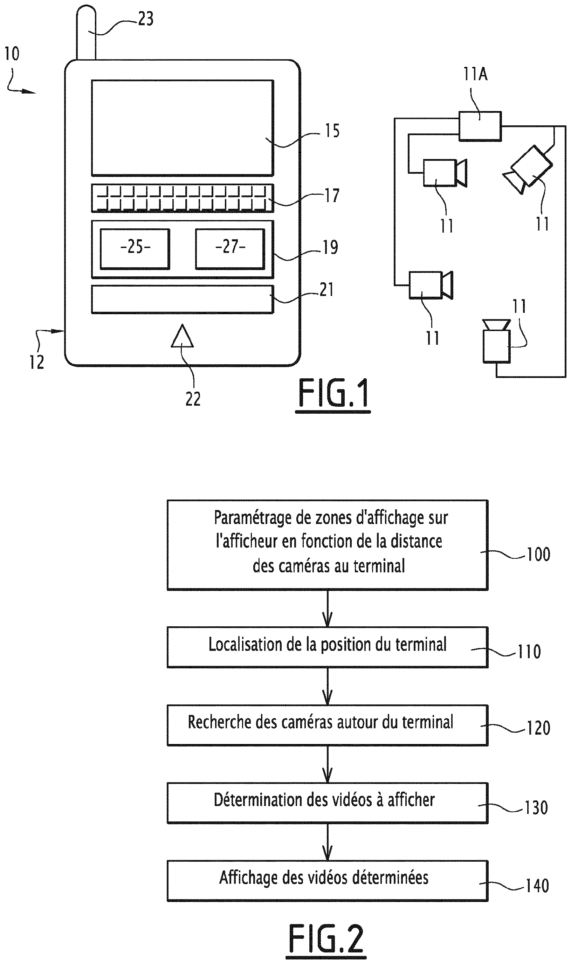

La figure 1 illustre schématiquement une installation 10 d'affichage d'images ou de vidéos en provenance d'un réseau de caméras 11 connectées à un système de vidéosurveillance 11A. Les caméras 11 sont, par exemple, des caméras de vidéosurveillance et/ou des enregistreurs vidéos. Les caméras 11 et l'installation 10 se trouvent, par exemple, dans une zone urbaine.

Le système de vidéosurveillance 11A est propre à réceptionner les flux multimédias issus des caméras 11 et à conserver en mémoire la localisation géographique de chaque caméra.

L'installation 10 d'affichage est propre à mettre en œuvre un procédé d'affichage d'images ou de vidéos selon l'invention.

L'installation 10 comprend, outre le système de vidéosurveillance 11A, un terminal 12.

Le terminal 12 est propre à être déplacé par un utilisateur.

Le terminal 12 comprend un afficheur 15, une interface homme-machine 17 et un processeur 19. Le terminal 12 comprend, en outre, un système de géolocalisation 21, une boussole 22 et une antenne 23. Optionnellement, le terminal 12 comprend, également, des gyroscopes et des accéléromètres.

L'afficheur 15 est configuré pour afficher les images ou vidéos issues des caméras 11. L'afficheur 15 est propre à afficher les vidéos sous forme d'une seule vidéo ou d'une mosaïque de vidéos. Une mosaïque de vidéos est l'affichage d'au moins une vidéo sur un premier emplacement parmi un ensemble d'emplacements situés côte à côte, les autres emplacements étant propres à afficher en simultané du premier emplacement une ou plusieurs autres images ou vidéos.

L'interface homme-machine 17 est, par exemple, un clavier, éventuellement tactile.

Le processeur 19 comprend une unité de traitement de données 25 et une mémoire 27 comprenant une application logicielle.

L'application logicielle est propre à être exécutée par l'unité de traitement de données 25, par exemple, sur commande de l'utilisateur via l'interface homme-machine 17 ou lors de l'activation du terminal 12.

L'application logicielle comporte un module de paramétrage de l'affichage de vidéos sur l'afficheur 15 du terminal 12, un module de localisation de la position du terminal 12 en interaction avec le système de géolocalisation 21, un module de recherche des caméras 11 autour du terminal 12 en interaction avec le système de vidéosurveillance, un premier module de détermination de l'orientation du terminal 12 en interaction avec la boussole 22 et/ou des gyroscopes, un module de calcul des distances des caméras 11 localisées au terminal 12 et/ou de calcul de la position des caméras 11 localisées par rapport à l'orientation du terminal 12, un deuxième module de détermination des vidéos à afficher sur l'afficheur 15 du terminal 12 et un module d'affichage de vidéos sur l'afficheur 15 en fonction des vidéos déterminées par le deuxième module de détermination.

En variante, l'installation 10 comprend, en outre, un ou plusieurs serveur, tels que des ordinateurs comprenant chacun une unité de traitement de données et une mémoire. Le ou les serveurs sont, par exemple, situés dans une salle informatique. Dans ce cas les différents modules de l'application logicielle sont répartis entre la mémoire 27 du terminal 12 et les mémoires des serveurs. Par exemple, le module de localisation et le premier module de détermination sont situés dans la mémoire du terminal 12 et sont propres à être exécutés par l'unité de traitement 25 du terminal 12. Les autres modules sont situés dans les mémoires des serveurs et sont propres à être exécutés par les unités de traitement des serveurs.

Chaque serveur est propre à communiquer avec le terminal 12. En particulier, chaque serveur est propre à, d'une part, réceptionner les données de position et d'orientation du terminal 12 et à, d'autre part, envoyer une commande d'affichage des vidéos sur l'afficheur 15 du terminal 12.

L'utilisation des serveurs permet de diminuer la charge de calcul du terminal 12, et donc éventuellement d'avoir un terminal 12 moins lourd et moins encombrant. Les serveurs disposent, en outre, généralement d'une meilleure puissance de calcul qu'un terminal.

Encore en variante ou en complément, le système de vidéosurveillance 11A est intégré dans le terminal 12 ou dans l'un des serveurs.

Le système de géolocalisation 21 est configuré pour transmettre en temps réel au terminal 12 la position de ce terminal 12. La position du terminal 12 est la position de l'afficheur 15 du terminal 12. La position du terminal 12 est, par exemple, repérée en latitude et en longitude.

Le système de géolocalisation 21 est, par exemple, un GPS (acronyme de l'anglais *Global Positioning System*) ou un système de géolocalisation en intérieur (en anglais *indoor geolocation*). La géolocalisation en intérieur permet de déterminer la position d'objets ou de personnes dans un espace interne à une structure, par exemple, un bâtiment.

La boussole 22 est propre à indiquer le nord magnétique terrestre

La boussole 22 est configurée pour déterminer en temps réel l'orientation du terminal 12 et, en particulier, l'orientation de l'afficheur 15 du terminal 12. L'orientation du terminal 12 est l'orientation de l'afficheur 15 du terminal 12. L'orientation du terminal 12 est, par exemple, repérée par rapport aux points cardinaux.

L'antenne 23 permet l'établissement d'une communication sans fil avec une autre antenne, par exemple une antenne reliée à des équipements informatiques situés dans une salle informatique. L'antenne 23 permet de transférer des données et d'en recevoir.

Le terminal 12 est, par exemple, un téléphone portable tel qu'un smartphone ou une tablette tactile. Un smartphone est un téléphone mobile évolué disposant de connectivités et de fonctions de calcul plus évoluées qu'un téléphone mobile classique. Une tablette tactile est un ordinateur portable ultraplat qui se présente sous la forme d'un écran tactile sans clavier.

Le fonctionnement de l'installation 10 est maintenant décrit en référence à la figure 2 qui est un organigramme d'un exemple de mise en œuvre d'un procédé d'affichage selon un premier mode de réalisation de l'invention.

Dans la suite de la description, le terme « vidéo » est employé de manière générique pour désigner une image ou une vidéo.

Initialement, le procédé d'affichage comprend une étape 100 de paramétrage de l'affichage de vidéos sur l'afficheur 15 du terminal 12 selon différents paramètres décrits ci-après.

Le premier paramètre d'affichage de vidéos sur l'afficheur 15 est le nombre de zones distinctes d'affichage de vidéos sur l'afficheur 15. Ce premier paramètre d'affichage peut être modifié en cours de fonctionnement, soit automatiquement suite à un événement déclenché par l'application logicielle ou suite à une commande de l'utilisateur via l'interface homme-machine 17. Le nombre de zones distinctes d'affichage détermine le nombre maximal de vidéos affichables simultanément sur l'afficheur 15.

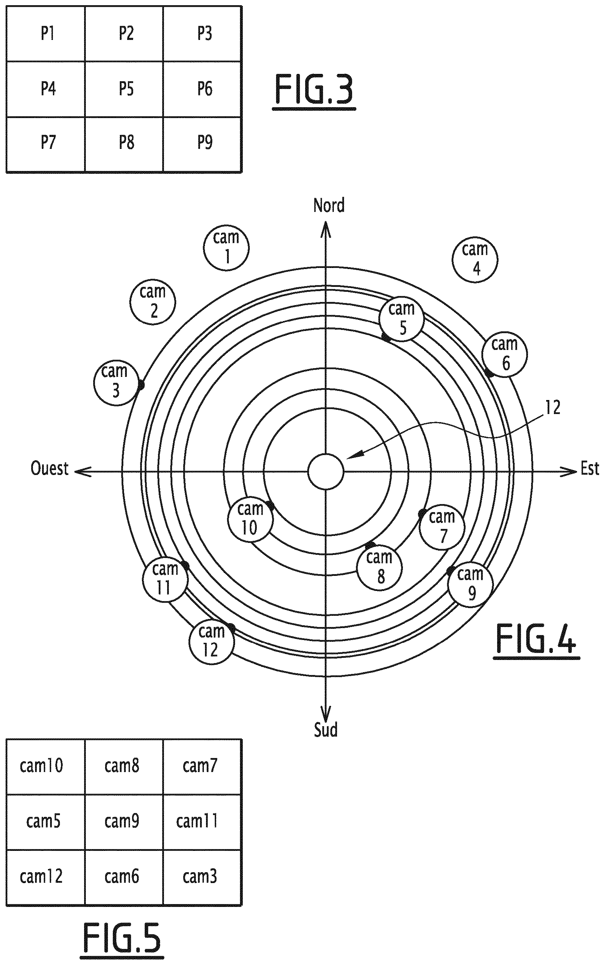

Dans l'exemple illustré sur la figure 3, le premier paramètre est choisi égal à neuf et les neufs zones d'affichage P1 à P9 définissent une mosaïque d'écrans de taille 3 par 3. Ainsi, dans cet exemple, seules 9 vidéos sont affichables simultanément sur l'afficheur 15.

Le deuxième paramètre d'affichage de vidéos sur l'afficheur 15 est l'ordre d'affichage des vidéos sur les différentes zones distinctes de l'afficheur 15.

Dans l'exemple illustré sur la figure 3, l'ordre d'affichage est choisi pour afficher les vidéos des caméras 11 par ordre croissant de la distance du terminal 12 à chaque caméra. Ainsi, dans cet exemple, la vidéo de la caméra 11 la plus proche du terminal 12 est affichée en premier.

Le troisième paramètre d'affichage de vidéos sur l'afficheur 15 est la zone d'affichage sur l'afficheur 15 des vidéos issue des caméras 11 en fonction de caractéristiques des caméras 11. La caractéristique des caméras 11 prise en compte dans ce premier mode de réalisation est la distance des caméras 11 au terminal 12. Le troisième paramètre stipule que les distances de chaque caméra 11 à l'afficheur 15 sont ordonnées selon un indice croissant et que chaque zone d'affichage est associée à un indice, les images ou vidéos affichables sur ladite zone d'affichage étant issues de caméras 11 dont la distance à l'afficheur 15 est ordonnée avec le même indice que l'indice associé à ladite zone d'affichage.

Par exemple, comme illustré sur la figure 3, le troisième paramètre est choisi pour afficher les vidéos par ordre croissant de la distance du terminal 12 à chaque caméra 11 de haut en bas et de gauche à droite de l'afficheur 15 en démarrant l'affichage par la zone d'affichage P1 située le plus en haut à gauche de l'afficheur 15 et en terminant l'affichage par la zone d'affichage P9 située la plus en bas à droite de l'afficheur 15. Ainsi, dans cet exemple, la vidéo de la caméra 11 la plus proche du terminal 12 est affichée sur la zone d'affichage P1.

Dans un autre exemple, les vidéos des caméras 11 sont affichées par ordre croissant de la distance du terminal 12 à chaque caméra 11 de bas en haut et de gauche à droite de l'afficheur 15 en démarrant l'affichage par la zone d'affichage P7 et en terminant l'affichage par la zone d'affichage P3.

Le paramétrage est, par exemple, préenregistré dans la mémoire 27 du terminal 12 ou en variante, en mémoire de l'un des serveurs de la salle informatique ou est choisi par l'utilisateur au moyen de l'interface homme-machine 17.

L'étape de paramétrage 100 est mise en œuvre par le module de paramétrage lors de l'exécution du module de paramétrage sur l'unité de traitement 25 du terminal 12 ou en variante, sur l'unité de traitement de l'un des serveurs.

L'étape de paramétrage 100 permet, également, de recenser les positions géographiques des caméras 11 situées dans une zone définie et de les enregistrer dans la mémoire 27 du terminal 12 ou dans la mémoire de l'un des serveurs pour y accéder ultérieurement. Les positions géographiques des caméras 11 sont, par exemple, repérées en latitude et en longitude. Pour cela, le terminal 12 ou l'un des serveurs communique avec le système de vidéosurveillance 11A pour recevoir les emplacements des caméras 11 ou lorsque le système de vidéosurveillance est intégré dans le terminal 12 ou dans l'un des serveurs, les emplacements des caméras 11 sont déjà préenregistrés dans la mémoire du terminal 12, respectivement du serveur.

L'étape de paramétrage 100 est mise en œuvre par le module de paramétrage lors de l'exécution du module de paramétrage sur l'unité de traitement 25.

Le procédé d'affichage comprend, ensuite, une étape 110 de localisation en temps réel de la position du terminal 12.

L'étape de localisation 110 est mise en œuvre par le système de géolocalisation 21 et par le module de localisation lors de l'exécution du module de localisation sur l'unité de traitement 25. Lors de cette étape de localisation, le système de géolocalisation 21 communique avec un ou plusieurs satellites ou avec un ou plusieurs systèmes de géolocalisation intérieurs.

Le procédé d'affichage comprend, ensuite, une étape 120 de recherche des caméras localisées dans un espace défini autour du terminal 12.

L'espace défini est, par exemple, centré autour de la position du terminal 12. Par exemple, l'espace défini est l'espace dans un rayon de 20 kilomètres autour de la position du terminal 12. En variante, l'espace défini est une zone située en avant de l'afficheur 15. L'avant de l'afficheur 15 comprend le nord-ouest et le nord-est de l'afficheur 15.

Dans l'exemple de la figure 4, l'espace défini est matérialisé par le cercle de plus grand rayon centré sur la position du terminal 12. Dans cet exemple, douze caméras cam1 à cam12 sont représentées. Les caméras cam3 et cam5 à cam12 sont situés dans l'espace défini. Les caméras cam1, cam2 et cam4 sont hors périmètre, c'est-à-dire hors de l'espace défini et ne sont donc pas recherchées lors de cette étape 120 de recherche.

Lors de cette étape de recherche 120, le terminal 12 communique avec le système de vidéosurveillance 11A pour recevoir les emplacements des caméras 11 situées dans l'espace défini ou a déjà en mémoire l'emplacement des caméras 11. Encore en variante, le terminal 12 ou l'un des serveurs communique directement avec les caméras 11 qui envoient directement au terminal 12 ou au serveur leur position.

L'étape de recherche 120 comprend, ensuite, le calcul de la première distance d1 à vol d'oiseau entre le terminal 12 et chaque caméra 11 de l'espace défini. La distance à vol d'oiseau est le plus petit chemin entre deux points.

Dans l'exemple de la figure 4, le rayon de chaque cercle matérialise la première distance d1 entre le terminal 12 et la caméra 11 située sur le cercle. Dans cet exemple, la plus petite première distance d1 est obtenue pour la caméra cam10.

Les premières distances d1 obtenues sont classées par ordre croissant.

L'étape de recherche 120 est mise en œuvre par l'antenne 23 du terminal 12 et par les module de recherche de caméras et de calcul lors de l'exécution des modules de recherche de caméras et de calcul sur l'unité de traitement 25 ou en variante sur l'unité de traitement de l'un des serveurs de la salle informatique.

Le procédé d'affichage comprend, ensuite, une étape 130 de détermination des vidéos à afficher sur l'afficheur 15 du terminal 12 selon le paramétrage défini lors de l'étape 100.

En reprenant les paramètres définis pour l'exemple de la figure 3 et l'emplacement des caméras cam1 à cam12 de la figure 4, la vidéo à afficher sur la zone d'affichage P1 provient de la caméra 11 dont la première distance d1 est la plus petite, c'est-à-dire de cam10, cette vidéo est également à afficher en premier sur l'afficheur 15. Les autres vidéos des caméras 11 localisées sont, ensuite, affectées aux zones d'affichage P2 à P9 de l'afficheur 15 par ordre croissant de la première distance d1 de la caméra 11 correspondante.

L'étape de détermination 130 est mise en œuvre par le deuxième module de détermination lors de l'exécution du deuxième module de détermination sur l'unité de traitement 25.

Le procédé d'affichage comprend, ensuite, une étape 140 d'affichage sur l'afficheur 15 des vidéos déterminées lors de l'étape de détermination 130.

L'étape d'affichage 140 est mise en œuvre par le module d'affichage lors de l'exécution du module d'affichage sur l'unité de traitement 25.

Les étapes de localisation 110, de recherche 120, de détermination 130 et d'affichage 140 sont répétées en temps réel pour prendre en compte les changements de position du terminal 12.

Ainsi, l'utilisateur a accès aux vidéos des caméras 11 situées dans un périmètre restreint autour de l'utilisateur. La position de l'utilisateur du terminal 12 est, en effet, considérée être la position du terminal 12. Les vidéos affichées sont, par exemple, issues des caméras 11 les plus proches du terminal 12 et donc de l'utilisateur. L'utilisateur bénéficie, ainsi, d'une vision étendue sur son environnement.

En outre, les vidéos sont affichées en temps réel et automatiquement, avec moins de deux secondes de latence par rapport au temps réel. Les vidéos sont, également, affichées simultanément sans actions spécifiques de l'utilisateur, ce qui permet à l'utilisateur de se concentrer sur le contenu des vidéos. L'ergonomie de l'utilisateur est donc améliorée.

Le paramétrage de l'affichage de vidéos sur l'afficheur 15 est, en outre, modifiable soit par commande de l'utilisateur, soit par mise en œuvre d'un autre paramétrage enregistré dans la mémoire 27 du terminal 12.

Enfin, avec un tel procédé l'utilisateur n'a pas à renseigner à l'avance sa trajectoire et est donc libre de suivre l'itinéraire qu'il souhaite sans que l'affichage des vidéos sur l'afficheur 15 soit perturbé.

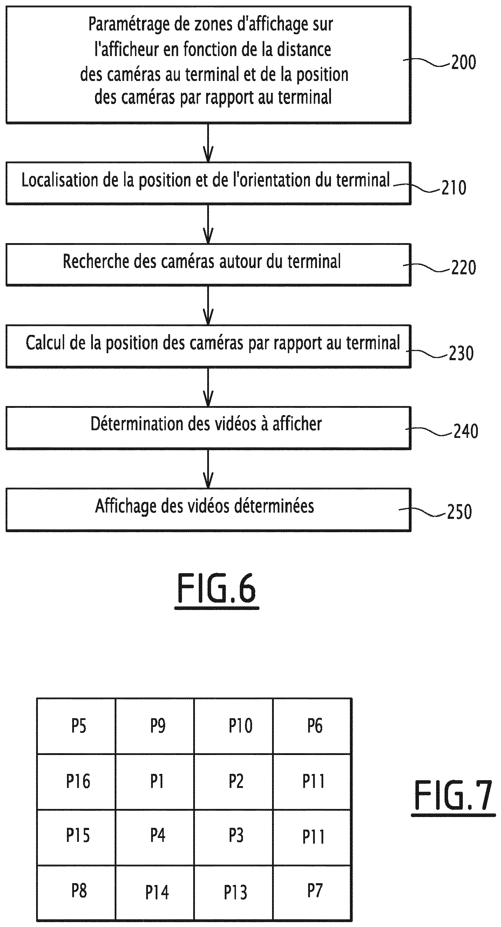

Le fonctionnement de l'installation 10 est maintenant décrit en référence à la figure 6 qui est un organigramme d'un exemple de mise en œuvre d'un procédé d'affichage selon un deuxième mode de réalisation de l'invention.

Initialement le procédé d'affichage selon le deuxième mode de réalisation comprend une étape 200 de paramétrage de l'affichage de vidéos sur l'afficheur 15 du terminal 12 selon des paramètres décrit ci-après.

Le premier paramètre d'affichage de vidéos sur l'afficheur 15 est identique au premier paramètre du premier mode de réalisation.

Dans l'exemple illustré sur la figure 7, le premier paramètre, c'est-à-dire le nombre de zones distinctes d'affichage de vidéos, est choisi égal à seize et les seize zones d'affichage P1 à P16 définissent une mosaïque d'écrans de taille 4 par 4. Ainsi, dans cet exemple, seules seize vidéos sont affichables simultanément sur l'afficheur 15.

Le deuxième paramètre d'affichage de vidéos sur l'afficheur 15 est identique au deuxième paramètre du premier mode de réalisation.

Dans l'exemple illustré sur la figure 7, le deuxième paramètre c'est-à-dire l'ordre d'affichage est choisi pour afficher les vidéos des caméras 11 par ordre croissant de la distance du terminal 12 à chaque caméra 11 depuis la zone d'affichage P1 jusqu'à la zone d'affichage P16. Ainsi, dans cet exemple, la vidéo de la caméra 11 la plus proche du terminal 12 est affichée en premier sur l'un des écrans P1 à P16.

Le troisième paramètre d'affichage de vidéos sur l'afficheur 15 est identique au troisième paramètre du premier mode de réalisation à la différence que la caractéristique des caméras 11 prise en compte est la position relative des caméras 11 par rapport à la position et à l'orientation du terminal 12.

Dans le deuxième mode de réalisation un espace défini autour du terminal 12 est divisé en différents secteurs angulaires de même ouverture angulaire. Un secteur angulaire est une figure plane délimitée par deux demi-droites ayant pour origine un même point. L'ouverture angulaire d'un secteur angulaire est l'angle à l'intersection des deux demi-droites qui délimitent le secteur angulaire. Le nombre de secteurs angulaires est fonction du nombre de zones d'affichage sur l'afficheur 15. Dans le cas d'un nombre pair de zones d'affichage, le nombre de secteurs angulaires est, avantageusement, supérieur ou égal au nombre de zones d'affichage. Dans le cas d'un nombre impair de zones d'affichage, le nombre de secteurs angulaires est, avantageusement, supérieur ou égal au nombre de zones d'affichage moins un.

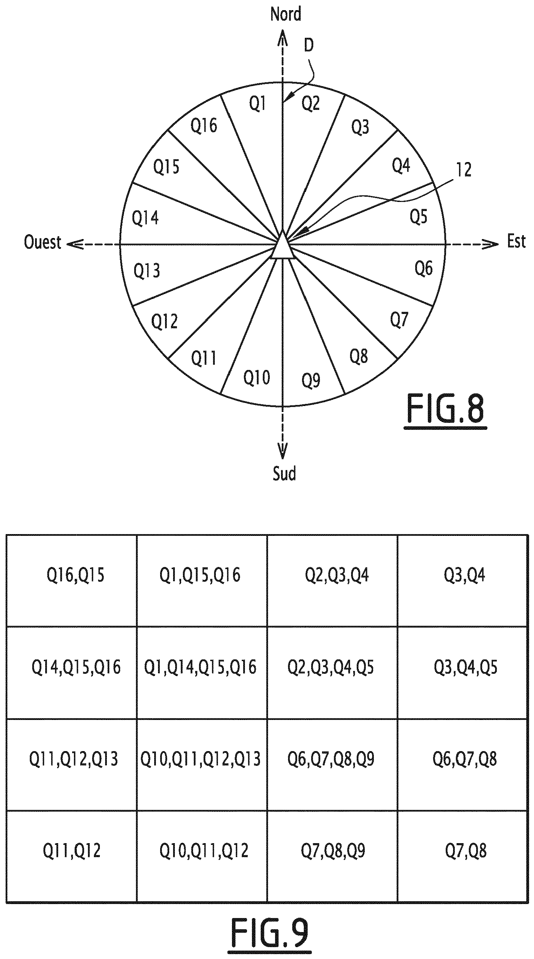

Dans l'exemple illustré sur la figure 7, le nombre de zones d'affichage sur l'afficheur 15 est égal à seize et le nombre de secteurs angulaires est également égal à seize. Les secteurs angulaires Q1 à Q16 sont illustrés sur la figure 8. Dans cet exemple, l'espace défini est matérialisé par un cercle centré autour de la position du terminal 12. Les secteurs angulaires Q1 à Q16 sont définis par leur angle relativement à la direction d'orientation D du terminal 12. La direction d'orientation D du terminal 12 est l'orientation déterminée par la boussole 22 et/ou le gyroscope du terminal 12. Ainsi, dans l'exemple de la figure 8, la direction d'orientation D est orientée au nord, le secteur Q1 a alors un angle égal à -22,5°, le deuxième secteur Q2 a un angle égal à +22,5°, le troisième secteur Q3 a un angle égal à 45°, etc.

Chaque secteur angulaire est associé à au moins une zone d'affichage sur l'afficheur 15. Les vidéos affichables sur une zone d'affichage spécifique de l'afficheur 15 sont issues de caméras 11 situées dans l'un des secteurs angulaires associés à la zone d'affichage spécifique.

Dans l'exemple illustré sur la figure 9, à la position P1 de l'afficheur (illustrée en figure 7) située dans la partie haute à gauche de l'afficheur 15, il est associé les secteurs angulaires Q1, Q14, Q15 et Q16 situés au nord-ouest du terminal 12. A la position P2, située dans la partie haute à droite de l'afficheur 15, il est associé les secteurs Q2, Q3, Q4 et Q5 situés au nord-est du terminal 12, etc. Les vidéos affichables sur l'écran sont donc fonction de la position relative des caméras 11 dont sont issues ces vidéos par rapport au terminal 12.

Les zones d'affichage sont propres à être testées pour chacune des vidéos des caméras 11 situées dans la zone définie selon un ordre prédéfini des zones d'affichage. Lorsque le secteur angulaire dans lequel se trouve la caméra 11 est un secteur angulaire associé à la zone d'affichage testée, la vidéo de la caméra 11 est propre à être affichée sur la zone d'affichage correspondante. Dans le cas contraire, les autres zones d'affichage sont propres à être testées suivant l'ordre prédéfini. Lorsque le secteur angulaire dans lequel se trouve une caméra 11 n'est associé à aucune zone d'affichage, dans un mode de réalisation qui ne fait pas partie de l'invention, la vidéo de la caméra 11 n'est pas affichée sur l'afficheur 15. Une fois qu'une vidéo a été affichée sur une zone d'affichage de l'afficheur 15, cette zone d'affichage n'est pas testée à nouveau pour les vidéos des caméras 11 suivantes. Ainsi, le troisième paramètre stipule que chaque zone d'affichage est associée à au moins un secteur angulaire, les images ou vidéos affichables sur ladite zone d'affichage étant issues de caméras appartenant au secteur angulaire associé à ladite zone d'affichage.

Dans l'exemple illustré sur les figures 7 à 9, l'ordre prédéfini consiste à tester les zones d'affichage P1 à P16 par ordre croissant du numéro de la zone d'affichage. La première zone d'affichage testée est donc P1 située en haut à gauche de l'afficheur 15 et la dernière zone testée est P16 située en haut et encore plus à gauche de l'afficheur 15.

Ainsi, la première vidéo à afficher est testée sur la première zone d'affichage P1. Si la caméra 11 de la vidéo n'est pas positionnée sur l'un des secteurs Q1, Q14, Q15 ou Q16, la vidéo de la caméra 11 n'est pas affichée sur la zone d'affichage P1, le test se poursuit alors pour la deuxième zone d'affichage P2, et ainsi de suite.

Le paramétrage est, par exemple, préenregistré dans la mémoire 27 du terminal 12 ou est choisi par l'utilisateur au moyen de l'interface homme-machine 17 ou bien stocké en mémoire de l'un des serveurs de la salle informatique.

L'étape de paramétrage 200 est mise en œuvre par le module de paramétrage lors de l'exécution du module de paramétrage sur l'unité de traitement 25 du terminal 12 ou en variante, sur l'unité de traitement de l'un des serveurs de la salle informatique.

L'étape de paramétrage 200 permet, également, de recenser les positions géographiques des caméras 11 situées dans une zone définie et de les enregistrer dans la mémoire 27 du terminal 12 ou dans la mémoire de l'un des serveurs pour y accéder ultérieurement. Les positions géographiques des caméras 11 sont, par exemple, repérées en latitude et en longitude. Pour cela, le terminal 12 ou l'un des serveurs communique avec le système de vidéosurveillance 11A pour recevoir les emplacements des caméras 11. Lorsque le système de vidéosurveillance est intégré dans le terminal 12 ou dans l'un des serveurs, les emplacements des caméras 11 sont déjà préenregistrés dans la mémoire du terminal 12, respectivement du serveur.

Le procédé d'affichage selon le deuxième mode de réalisation comprend, ensuite, une étape 210 de localisation en temps réel de la position du terminal 12 et de détermination de la direction d'orientation D du terminal 12.

La localisation du terminal 12 est mise en œuvre par le système de géolocalisation 21 et par le module de localisation lors de l'exécution du module de localisation sur l'unité de traitement 25.

La détermination de l'orientation du terminal 12 est mise en œuvre par la boussole 22 et/ou par le gyroscope et par le premier module de détermination lors de l'exécution du premier module de détermination sur l'unité de traitement 25.

Le procédé d'affichage comprend, ensuite, une étape 220 de recherche des caméras 11 situées dans un espace défini autour du terminal 12. L'étape de recherche 220 de ce deuxième mode de réalisation est identique à l'étape de recherche 120 du premier mode de réalisation.

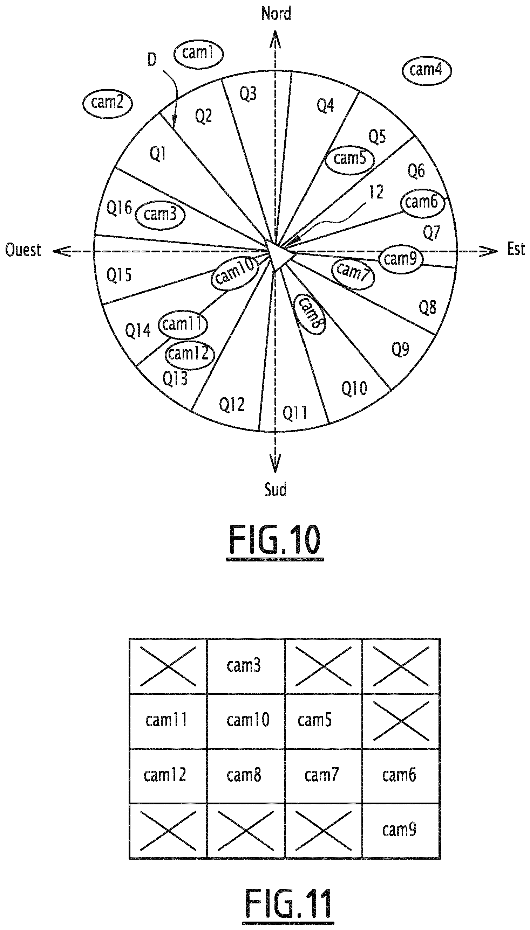

Dans l'exemple de la figure 10, l'espace défini est matérialisé par un cercle centré sur la position du terminal 12. Dans cet exemple, douze caméras cam1 à cam12 sont situées dans l'espace défini. Les caméras cam1, cam2 et cam4 sont hors périmètre et ne sont donc pas localisées lors de cette étape 120 de localisation.

Le procédé d'affichage comprend, également, une étape 230 de calcul de la position des caméras par rapport au terminal 12 en déterminant le secteur angulaire correspondant à la position de la caméra. L'angle entre la droite matérialisant la direction d'orientation D du terminal 12 est la droite reliant chaque caméra 11 au terminal 12 est calculé et est comparé à l'angle définissant chaque secteur angulaire de sorte à déterminer le secteur angulaire dans lequel est positionné chaque caméra.

Comme illustré sur la figure 9, la caméra cam10 est localisée dans le secteur angulaire Q14, la caméra cam8 dans le secteur Q10, etc.

L'étape de calcul 230 est mise en œuvre par le module de calcul lors de l'exécution du module de calcul sur l'unité de traitement 25.

Le procédé d'affichage comprend, ensuite, une étape 240 de détermination des vidéos à afficher sur l'afficheur 15 du terminal 12 selon le paramétrage défini lors de l'étape 200.

En reprenant les paramètres définis pour les exemples des figures 7 à 9 et l'emplacement des caméras cam1 à cam12 de la figure 10, les vidéos des caméras 11 sont affichées sur l'écran par ordre croissant de la distance des caméras 11 au terminal 12. La caméra cam10 est donc affichée en premier sur l'afficheur 15. La caméra cam10 étant située sur le secteur angulaire Q14 associé aux zones d'affichage P1 et P16, la vidéo de la caméra cam10 est affichée sur la zone d'affichage P1 (comme visible sur la figure 11) puisque la zone d'affichage P1 est testée avant la zone d'affichage P16. La caméra cam8, située sur le secteur Q10 est, ensuite, affichée sur la zone d'affichage P4 (comme visible sur la figure 11) puisque le secteur Q10 n'est pas associé aux zones d'affichage P2 et P3 et que la zone d'affichage P14 vient après la zone P4. Les zones d'affichage P5, P6, P8, P10, P13 et P14 n'affichent pas de vidéos car aucune caméra 11 n'est située dans les secteurs associés à ces zones d'affichages ou car les caméras 11 situées dans les secteurs associés à ces zones d'affichage ont déjà été affichées sur d'autres zones d'affichage située avant dans l'ordre prédéfini.

L'étape de détermination 240 est mise en œuvre par le deuxième module de détermination lors de l'exécution du deuxième module de détermination sur l'unité de traitement 25.

Le procédé d'affichage comprend, ensuite, une étape 250 d'affichage des vidéos déterminées lors de l'étape de détermination 240.

L'étape d'affichage 250 est mise en œuvre par le module d'affichage lors de l'exécution du module d'affichage sur l'unité de traitement 25.

Les étapes de localisation 210, de recherche 220, de calcul 230, de détermination 240 et d'affichage 250 sont répétées en temps réel pour prendre en compte les changements de position et d'orientation du terminal 12.

Ainsi, le procédé d'affichage selon le deuxième mode de réalisation permet, en outre des avantages cités lors du premier mode de réalisation, un affichage ordonné des vidéos en fonction de la position des caméras 11 par rapport à la position du terminal 12 et donc par rapport à la position de l'utilisateur du terminal 12. L'utilisateur identifie ainsi rapidement les caméras 11 situées au nord, au sud, à l'est et l'ouest de sa position.

## Revendications

1. Procédé d'affichage sur un afficheur (15) d'images ou de vidéos en provenance de caméras (11), l'afficheur (15) comportant plusieurs zones d'affichage(P1, ...P16), le procédé comportant :
- la localisation (110 ; 210) de l'afficheur (15),
- la recherche (120 ; 220) des caméras (11) situées dans un espace défini autour de l'afficheur (15), l'espace défini étant divisé en différents secteurs angulaires (Q1,..., Q16), l'espace défini étant matérialisé par un cercle centré autour de position de l'afficheur (15), les secteurs angulaires (Q1,..., Q16) étant définis par leur angle relativement à la direction d'orientation de l'afficheur (15), chaque secteur angulaire (Q1,..., Q16) étant associé à au moins une zone d'affichage (P1, ...P16) sur l'afficheur,
- le calcul (120 ; 220) de la distance entre l'afficheur (15) et chaque caméra (11) localisée, la distance calculée entre l'afficheur (15) et chaque caméra (11) étant une distance à vol d'oiseau,
- la détermination (130 ; 240) des images ou des vidéos à afficher sur les zones d'affichage (P1, ..., P16) de l'afficheur (15) en fonction d'au moins un premier critère relatif à la distance calculée pour chaque caméra (11) et d'un deuxième critère relatif à la position de chaque caméra (11) par rapport à l'orientation de l'afficheur (15), le deuxième critère stipulant que chaque zone d'affichage (P1, ...P16) est associée à au moins un secteur angulaire (Q1,..., Q16), les images ou vidéos affichables sur ladite zone d'affichage (P1, ...P16) étant issues de caméras (11) appartenant à un secteur angulaire (Q1,..., Q16) associé à ladite zone d'affichage (P1, ...P1), l'étape de détermination (130 ; 240) comprenant la détermination du secteur angulaire (Q1,..., Q16) dans lequel est située chaque caméra (11) localisée, et
- l'affichage (140 ; 250) des images ou des vidéos déterminées sur les zones d'affichage (P1, ..., P16) correspondantes de l'afficheur (15).

2. Procédé d'affichage selon la revendication 1, dans lequel lors de l'étape d'affichage (140 ; 250), les images ou les vidéos sont affichées sur l'afficheur (15) selon un ordre prédéfini, l'ordre prédéfini étant fonction de la distance de chaque caméra (11) à l'afficheur (15).

3. Procédé d'affichage selon la revendication 2, dans lequel l'ordre prédéfini permet l'affichage des images ou des vidéos des caméras (11) par ordre croissant de la distance de l'afficheur (15) à chaque caméra (11).

4. Procédé d'affichage selon l'une quelconque des revendications précédentes, dans lequel le premier critère stipule que les distances de chaque caméra (11) à l'afficheur (15) sont ordonnées selon un indice croissant, chaque zone d'affichage (P1, ...P16) étant associée à un indice, les images ou vidéos affichables sur ladite zone d'affichage (P1, ...P16) étant issues de caméras (11) dont la distance à l'afficheur (15) est ordonnée avec l'indice associé à ladite zone d'affichage (P1, ...P16).

5. Procédé selon l'une quelconque des revendications précédentes, dans lequel le nombre de secteurs angulaires (Q1,..., Q16) est supérieur ou égal à un moins le nombre de zones d'affichage (P1, ...P16).

6. Procédé selon l'une quelconque des revendications précédentes, dans lequel l'espace défini est une zone située au nord de l'afficheur (15).

7. Installation (10) d'affichage d'images ou de vidéos en provenance de caméras (11), l'installation (10) comportant un terminal (12) comprenant :
- un afficheur (15) comportant plusieurs zones d'affichage (P1, ...P16),
- un module de localisation de l'afficheur (15),
- un module de recherche des caméras (11) situées dans un espace défini autour de l'afficheur (15), l'espace étant divisé en différents secteurs angulaires (Q1,..., Q16), les secteurs angulaires (Q1,..., Q16) étant définis par leur angle relativement à la direction d'orientation de l'afficheur (15), chaque secteur angulaire (Q1,..., Q16) étant associé à au moins une zone d'affichage (P1, ...P16) sur l'afficheur,
- un module de calcul de la distance entre l'afficheur (15) et chaque caméra (11) localisée, la distance calculée entre l'afficheur (15) et chaque caméra (11) étant une distance à vol d'oiseau,
- un module de détermination des images ou des vidéos à afficher sur la zone d'affichage (P1, ..., P16) de l'afficheur (15) en fonction d'au moins un premier critère relatif à la distance calculée pour chaque caméra et d'un deuxième critère relatif à la position de chaque caméra (11) par rapport à l'orientation de l'afficheur (15), l'étape de détermination (130 ; 240) comprenant la détermination du secteur angulaire (Q1,..., Q16) dans lequel est située chaque caméra (11) localisée, le deuxième critère stipulant que chaque zone d'affichage (P1, ...P16) est associée à au moins un secteur angulaire (Q1,..., Q16), les images ou vidéos affichables sur ladite zone d'affichage (P1, ...P16) étant issues de caméras (11) appartenant à un secteur angulaire (Q1,..., Q16) associé à ladite zone d'affichage (P1, ...P1), et
l'afficheur (15) étant propre à afficher des images ou des vidéos déterminées par le module de détermination sur les zones d'affichage (P1, ..., P16) correspondantes de l'afficheur (15).

## Patentansprüche

1. Verfahren zum Anzeigen, auf einer Anzeige (15), von von Kameras (11) stammenden Bildern oder Videos, wobei die Anzeige (15) mehrere Anzeigebereiche (P1, ..., P16) aufweist, wobei das Verfahren aufweist:
- das Lokalisieren (110; 210) der Anzeige (15),
- das Suchen (120; 220) nach Kameras (11), welche sich in einem um die Anzeige (15) herum definierten Raum befinden, wobei der definierte Raum in unterschiedliche Winkelbereiche (Q1, ..., Q16) unterteilt ist, wobei die Winkelbereiche (Q1, ..., Q16) durch ihren Winkel bezüglich der Orientierungsrichtung der Anzeige (15) definiert sind, wobei jeder Winkelbereich (Q1, ..., Q16) mindestens einem Anzeigebereich (P1, ..., P16) auf der Anzeige zugeordnet ist,
- das Berechnen (120; 220) des Abstands zwischen der Anzeige (15) und jeder lokalisierten Kamera (11), wobei der berechnete Abstand zwischen der Anzeige (15) und jeder Kamera (11) eine Luftliniendistanz ist,
- das Ermitteln (130; 240) von auf den Anzeigebereichen (P1, ..., P16) der Anzeige (15) anzuzeigenden Bildern oder Videos in Abhängigkeit von mindestens einem ersten Kriterium bezüglich eines für jede Kamera (11) berechneten Abstands und einem zweiten Kriterium bezüglich der Position jeder Kamera (11) bezogen auf die Ausrichtung der Anzeige (15), wobei das zweite Kriterium besagt, dass jeder Anzeigebereich (P1, ..., P16) der Anzeige (15) zu mindestens einem Winkelbereich (Q1, ..., Q16) zugeordnet ist, wobei die auf dem Anzeigebereich (P1, ..., P16) anzeigbaren Bilder oder Videos von den Kameras (11), welche zu einem Winkelbereich (Q1, ..., Q16), welcher dem Anzeigebereich (P1, ..., P16) zugeordnet ist, gehören, ausgegeben werden, wobei der Schritt des Ermittelns (130; 240) aufweist das Ermitteln des Winkelbereichs (Q1, ..., Q16), in welchem sich jede lokalisierte Kamera (11) befindet,
- das Anzeigen (140; 250) der ermittelten Bilder oder der Videos auf den korrespondierenden Anzeigebereichen (P1, ..., P16) der Anzeige (15).

2. Verfahren zum Anzeigen gemäß dem Anspruch 1, wobei bei dem Schritt des Anzeigens (140; 250) die Bilder oder die Videos auf der Anzeige (15) gemäß einer vordefinierten Reihenfolge angezeigt werden, wobei die vordefinierte Reihenfolge abhängig von dem Abstand jeder Kamera (11) zur Anzeige (15) ist.

3. Verfahren zum Anzeigen gemäß dem Anspruch 2, wobei die vordefinierte Reihenfolge das Anzeigen der Bilder oder der Videos der Kameras (11) nach ansteigendem Abstand der Anzeige (15) zu jeder Kamera (11) erlaubt.

4. Verfahren zum Anzeigen gemäß irgendeinem der vorhergehenden Ansprüche, wobei das erste Kriterium besagt, dass die Abstände jeder Kamera (11) zu der Anzeige (15) gemäß einem ansteigenden Index geordnet sind, wobei jeder Anzeigebereich (P1, ..., P16) einem Index zugeordnet ist, wobei die auf dem Anzeigebereich (P1, ..., P16) anzeigbaren Bilder oder Videos von den Kameras (11) ausgegeben werden, deren Abstand zur Anzeige (15) mit dem Index, der zu einem Anzeigebereich (P1, ..., P16) zugeordnet ist, geordnet ist.

5. Verfahren zum Anzeigen gemäß irgendeinem der vorhergehenden Ansprüche, wobei die Anzahl von Winkelbereichen (Q1, ..., Q16) größer oder gleich mindestens der Anzahl von Anzeigebereichen (P1, ..., P16) ist.

6. Verfahren zum Anzeigen gemäß irgendeinem der vorhergehenden Ansprüche, wobei der definierte Raum ein Bereich ist, welcher nordwärts der Anzeige (15) angeordnet ist.

7. Einrichtung (10) zum Anzeigen von von Kameras (11) stammenden Bildern oder Videos, wobei die Einrichtung (10) ein Endgerät (12) aufweist, welches aufweist:
- eine Anzeige (15), die mehrere Anzeigebereiche (P1, ..., P16) aufweist,
- ein Modul zum Lokalisieren der Anzeige (15),
- ein Modul zum Suchen nach Kameras (11), welche sich in einem um die Anzeige (15) herum definierten Raum befinden, wobei der definierte Raum in unterschiedliche Winkelbereiche (Q1, ..., Q16) unterteilt ist, wobei die Winkelbereiche (Q1, ..., Q16) durch ihren Winkel bezüglich der Orientierungsrichtung der Anzeige (15) definiert sind, wobei jeder Winkelbereich (Q1, ..., Q16) mindestens einem Anzeigebereich (P1, ..., P16) auf der Anzeige zugeordnet ist,
- ein Modul zum Berechnen des Abstands zwischen der Anzeige (15) und jeder lokalisierten Kamera (11), wobei der berechnete Abstand zwischen der Anzeige (15) und jeder Kamera (11) eine Luftliniendistanz ist,
- ein Modul zum Ermitteln von auf dem Anzeigebereich (P1, ..., P16) der Anzeige (15) anzuzeigenden Bildern oder Videos in Abhängigkeit von mindestens einem ersten Kriterium bezüglich eines für jede Kamera (11) berechneten Abstands und einem zweiten Kriterium bezüglich der Position jeder Kamera (11) bezogen auf die Ausrichtung der Anzeige (15), wobei der Schritt des Ermittelns (130; 240) das Ermitteln des Winkelbereichs (Q1, ..., Q16), in welchem sich jede lokalisierte Kamera (11) befindet, aufweist, wobei das zweite Kriterium besagt, dass jeder Anzeigebereich (P1, ..., P16) der Anzeige (15) zu mindestens einem Winkelbereich (Q1, ..., Q16) zugeordnet ist, wobei die auf dem Anzeigebereich (P1, ..., P16) anzeigbaren Bilder oder Videos von den Kameras (11), welche zu einem Winkelbereich (Q1, ..., Q16), welcher dem Anzeigebereich (P1, ..., P16) zugeordnet ist, gehören, ausgegeben werden, und
wobei die Anzeige (15) geeignet ist zum Anzeigen (140; 250) der durch das Modul zum Ermitteln ermittelten Bilder oder der Videos auf den korrespondierenden Anzeigebereichen (P1, ..., P16) der Anzeige (15).

## Claims

1. A method for displaying on a display (15) images or videos from cameras (11), the display (15) comprising at least one display zone (P1, ...P16), the method comprising:
- localizing (110; 210) the display (15),
- searching (120; 220) for cameras (11) located in a defined area around the display (15), the defined area being divided into different angular sectors (Q1, ..., Q16), the defined area being embodied by a circle centered around the position of the display (15), the angular sectors (Q1, ..., Q16) being defined by their angle relative to the orientation direction (D) of the display (15), each angular sector (Q1, ..., Q16) being associated to at least one display zone (P1, ...P16) of the display,
- computing (120; 220) the distance between the display (15) and each localized camera (11), the computed distance between the display (15) and each camera (11) being a crow flies distance,
- determining (130; 240) the images or videos to be displayed on the display zone (P1, ..., P16) of the display (15) based on at least one first criterion relative to the distance computed for each camera (11) and on a second criterion relative to the position of each camera (11) with respect to the orientation of the display (15), the second criterion stipulating that each display zone (P1, ..., P16) is associated with at least one angular sector (Q1, ..., Q16), the images or videos that can be displayed on said display zone (P1, ..., P16) coming from cameras (11) belonging to the angular sector (Q1, ..., Q16) associated with said display zone (P1, ..., P16), the determining step (130; 240) comprising determining the angular sector (Q1, ..., Q16) in which each localized camera (11) is localized, and
- displaying (140; 250) the determined images or videos on the corresponding display zones (P1, ..., P16) of the display (15).

2. The display method according to claim 1, wherein during the display step (140; 250), the images or videos are displayed on the display (15) in a predefined order, the predefined order depending on the distance from each camera (11) to the display (15).

3. The display method according to claim 2, wherein the predefined order makes it possible to display images or videos from the cameras (11) in increasing order of the distance from the display (15) to each camera (11).

4. The display method according to any one of the preceding claims, wherein the first criterion stipulates that the distances from each camera (11) to the display (15) are ordered by increasing index, each display zone (P1, ...P16) being associated with an index, the images or videos that can be displayed on the display zone (P1, ...P16) coming from cameras (11) whose distance from the display (15) is ordered with the index associated with said display zone (P1, ...P16).

5. The method according to any one of the preceding claims, wherein the number of angular sectors (Q1, ..., Q16) is greater than or equal to at least the number of display zones (P1, ..., P16).

6. The method according to any one of the preceding claims, wherein the defined area is a zone situated north of the display (15).

7. An installation (10) for displaying images or videos from cameras (11), the installation (10) comprising a terminal (12) comprising:
- a display (15) comprising at least one display zone (P1, ..., P16),
- a module for localizing the display (15),
- a module for searching for cameras (11) situated in a defined area around the display (15), the defined area being divided into different angular sectors (Q1, ..., Q16), the angular sectors (Q1, ..., Q16) being defined by their angle relative to the orientation direction of the display (15), each angular sector (Q1, ..., Q16) being associated to at least one display zone (P1, ...P16) of the display,
- a module for computing the distance between the display (15) and each localized camera (11), the computed distance between the display (15) and each camera (11) being a crow flies distance,
- a module for determining images or videos to be displayed on the display zone (P1, ..., P16) of the display (15) based on at least a first criterion relative to the computed distance for each camera and on a second criterion relative to the position of each camera (11) with respect to the orientation of the display (15), the determining step (130; 240) comprising determining the angular sector (Q1, ..., Q16) in which each localized camera (11) is localized, the second criterion stipulating that each display zone (P1, ..., P16) is associated with at least one angular sector (Q1, ..., Q16), the images or videos that can be displayed on said display zone (P1, ..., P16) coming from cameras (11) belonging to the angular sector (Q1, ..., Q16) associated with said display zone (P1, ..., P16), and
- a module for displaying images or videos determined by the determining module on the corresponding display zones (P1, ..., P16) of the display (15).
